# EUROPÄISCHE PATENTANMELDUNG

(11) **EP 0 853 973 A2**
(43) Veröffentlichungstag der Anmeldung: **22.07.1998**
(21) Anmeldenummer: 97119413.9
(22) Anmeldetag: 06.11.1997
(51) Int. Cl.: B01J 2/22

(54) **Vorrichtung zum Pelletieren von schüttfähigen Massen und Verfahren zur Herstellung einer solchen Vorrichtung**

(30) Priorität: 18.01.1997 DE 19701673
(71) Anmelder: Kühlmann, Josef, D-48366 Laer (DE)
(72) Erfinder: Kühlmann, Josef, D-48366 Laer (DE)
(74) Vertreter: Habbel, Hans-Georg, Dipl.-Ing.

(57) **Zusammenfassung**

Die Erfindung bezieht sich auf eine Vorrichtung zum Pelletieren von schüttfähigen Massen mit zwei miteinander kämmenden, hohlen Zahnrädern einer Stirnradpaarung, von denen wenigstens eines angetrieben ist, wobei der Zahnkranz beider Zahnräder Bohrungen aufweist, die vom Tiefsten einer Zahnlücke zu einem Innenhohlraum führen, wobei der Raum der Zahnlücken in radialer Richtung vom Radius des Fußkreises bis zum Radius des Teilkreises in axialer Richtung nach außen hin abgeschlossen ist.

## Beschreibung

Die Erfindung bezieht sich auf eine Vorrichtung gemäß dem Oberbegriff des Hauptanspruches und Verfahren zur Herstellung einer solchen Vorrichtung.

Unter schüttfähigen Massen werden schüttfähige Stoffe verstanden, die pelletierbar sind, wie z. B. Kompost, Brotreste, Müll, Pferdekot oder Hühnerkot, d. h. Stoffe, die im pelletierten Zustand leichter zu handhaben sind als im Ausgangszustand. Pelletierte Stoffe werden in der Tierhaltung in großem Umfang als Futtermittel eingesetzt.

Beispielsweise in der EP 465 811 B1 wird eine Käfiganlage für Geflügelzuchtbetriebe vorgeschlagen, bei welcher ein Trocknungstunnel vorgesehen ist, durch den die Kotförderbänder geführt werden, wobei durch eine entsprechende Luftführung im Trocknungstunnel nunmehr die auf den Kotförderbändern befindliche Kotschicht getrocknet und schließlich der getrocknete Kot vom Kotförderband abgekratzt und einer Verwertungsstelle zugeführt wird.

Auf den Kotförderbändern befindet sich nicht nur reiner Kot der Hühner, sondern der Kot ist verunreinigt durch Futterreste, durch Federn, durch Einstreu od. dgl., so daß die getrocknete Kotmasse außerordentlich unansehnlich, klumpig und schlecht handhabbar ist Wird diese Kotmasse beispielsweise als Dünger ausgebracht, ist ihre Verarbeitung schwierig und vor allen Dingen sind die der Kotmasse beigefügten Gefiederteile außerordentlich störend.

Aus der SU 16 90 839-A1, Referat aus Chemical Patents Index, Derwent Publications LTD, London, Ref.-Nr.: 92-338688/41 ist eine Vorrichtung zum Pelletieren von schüttfähigen Massen mit zwei miteinander kämmenden hohlen Zahnrädern bekanntgeworden, von denen wenigstens eines angetrieben ist, wobei der Zahnkranz beider Zahnräder Bohrungen aufweist, die vom Tiefsten einer Zahnlücke zu einem vorgesehenen Innenhohlraum führen Mit dieser Einrichtung sollen Tierfutterpellets hergestellt werden. Diese bekannte Einrichtung ist in der Praxis nicht bekanntgeworden und in der in der Veröffentlichung beschriebenen Form auch nicht funktionsfähig, da nicht erläutert wird, in welcher Form die in den Zahnlücken gebildeten Hohlräume bei der Arbeitsweise der Vorrichtung nach außen hin verschlossen werden, um dem hohen Druck standzuhalten, der beim Durchpressen des Schüttgutes durch die Verbindungsbohrungen auftritt.

In der SU 1368020-A, Referat aus Chemical Patents Index, Derwent Publications LTD, London, Ref. Nr.: 88-219324/31 ist eine Anordnung bekannt, bei der aus schlammförmigem Ausgangsprodukt Pellets geformt werden sollen. Hierzu sind in einer Walze entsprechende Aufnahmeräume ausgeformt, die über Leitungen mit dem Walzeninneren, das hohl ausgebildet ist, in Verbindung stehen, wobei im Walzeninneren ein Vakuum herrscht, das zur Trocknung und Abführung des Wassers dient. Diese Anordnung kann zum Pelletieren schüttfähiger Massen nicht eingesetzt werden.

Aus der DE-AS 11 01 374 bzw. der DE 40 38 582 A1 sind Walzenpaare bekanntgeworden, die mit zusammenwirkenden Vorsprüngen und Ausnehmungen ausgerüstet sind, um derart Pellets herzustellen. Auch hier sollen verformbare Stoffe, vorzugsweise plastische, thermoplastische und Schlämmstoffe pelletisiert werden. Die bei diesen Stoffen auftretenden Drücke, um die Pelletisierung durchzuführen, sind längst nich so hoch wie sie bei der Pelletisierung von schüttfähigen Stoffen auftreten. Auch werden keine Stirnradpaarungen vorgeschlagen, sondern Walzen mit auf den Walzen ausgenommenen Ausnehmungen.

Der Erfindung liegt die Aufgabe zugrunde, die gattungsbildende Anordnung gemäß der SU 1690839-A1 dahingehend zu verbessern, daß eine funktionsfähige Zahnradpaarung erreicht wird.

Diese der Erfindung zugrundeliegende Aufgabe wird durch die Lehre des Hauptanspruches gelöst.

Vorteilhafte Ausgestaltungen sind in den Unteransprüchen erläutert.

Weiterhin beschäftigt sich die Erfindung mit Verfahren zur Herstellung der Vorrichtung gemäß dem Hauptanspruch.

Mit anderen Worten ausgedrückt wird vorgeschlagen, daß die durch die Zahnlücken gebildeten Räume nach außen hin so abgeschlossen werden, daß ein geschlossener Raum entsteht, der vom Fußkreis des Zahnrades in radialer Richtung gesehen bis zur Höhe des Teilkreises abgeschlossen ist.

Gemäß einem weiteren wesentlichen Merkmal der Erfindung wird dabei nicht so vorgegangen, daß eine Abschlußplatte od. dgl. auf die Außenseite des Zahnrades aufgeschraubt oder sonstwie befestigt wird, sondern der Verschluß wird entwederdurch den Werkstoff des Zahnrades selbst gebildet, was dann aber eine aufwendigere Bearbeitung und Herstellung der Zähne erfordert oder es werden Stützringe eingelegt, die sich nach außen hin aber aus dem Material des Zahnrades bestehende Widerlager abstützen.

Überraschenderweise hat sich herausgestellt, daß trotz entsprechender Materialwahl erhebliche Verschleißerscheinungen in den Zahnlücken, an den Zähnen und in den vom Zahnlückentiefsten bis zum Innenhohlraum des Zahnrades vorgesehenen Bohrungen auftreten. Um nach Auftreten dieser Verschleißerscheinungen nicht komplett neue Zahnräder einsetzen zu müssen, wird gemäß der Erfindung auch vorgeschlagen, daß in die Zahnlücken Einsatzstücke eingesetzt werden, die leicht auswechselbar sind und ebenso in die vorher genannten Bohrungen entsprechende Einsatzstücke eingepaßt werden. Treten nunmehr Verschleißerscheinungen auf, können diese Einsatzstücke verworfen und durch neue Einsatzstücke ersetzt werden, ohne daß das komplette Stirnrad ausgewechselt werden muß.

Ausführungsbeispiele der Erfindung werden nachfolgend anhand der Zeichnungen erläutert.

Die Zeichnungen zeigen dabei in
- Fig. 1: einen Rohling zur Herstellung der erfindungsgemäßen Vorrichtung, in
- Fig. 2: den Rohling gemäß Fig. 1 nach einem ersten Bearbeitungsschritt, in
- Fig. 3: den teilweise bearbeiteten Rohling gemäß Fig. 2 nach einem weiteren Bearbeitungsschritt, in
- Fig. 4: einen Schnitt durch ein fertig bearbeitetes und hergestelltes Zahnrad, in
- Fig. 5: schematisch einen Schnitt durch eine Zahnradpaarung und schließlich in

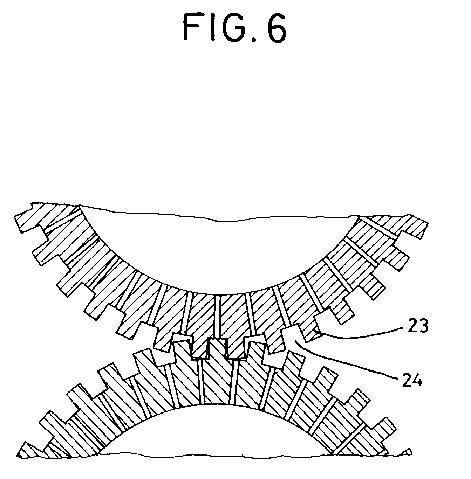

- Fig. 6: ein abgeändertes Ausführungsbeispiel.

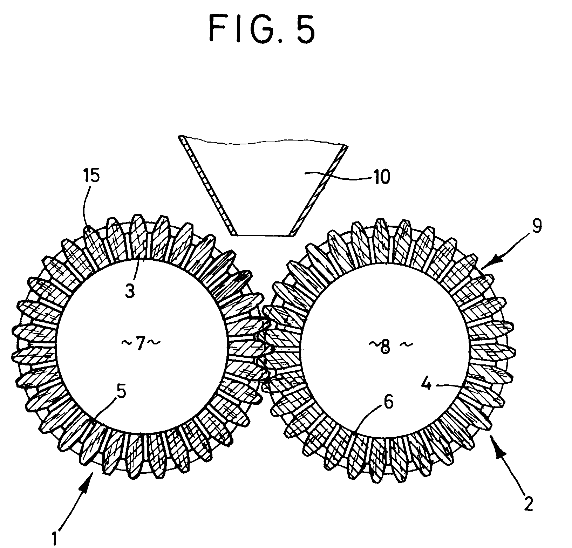

In Fig. 5 sind zwei Zahnräder 1 und 2 dargestellt, die mit einer Evolventenverzahnung ausgerüstet sind, so daß zwischen den einzelnen Zähnen Zahnlücken 9 gebildet werden. Im Inneren der Zahnräder 1 und 2 ist ein Innenhohlraum 7 und 8 vorgesehen, der von den Zahnkränzen 3 und 4 der Zahnräder 1 und 2 in radialer Richtung umschlossen wird.

Im Zahnlückentiefsten sind Bohrungen 5 und 6 angeordnet, die in den Innenhohlraum 7 und 8 führen und aus der Darstellung in Fig. 5 ist erkennbar, daß dann, wenn die beiden Zahnräder 1 und 2 miteinander kämmen, die Zähne 15 die beispielsweise aus einem Vorratstrichter 10 zugeführte schüttfähige Masse komprimieren und dabei durch die jeweiligen Bohrungen 5 und 6 hindurchtreiben. Auf diese Weise wird die Masse komprimiert und zerkleinert, beispielsweise größere Bestandteile werden zerschnitten und die Masse wird dann von den Zähnen in den Innenhohlraum 7 und 8 geführt. Die hier vorgesehenen Mittel zum Abführen und ggf. Zerkleinern der Pellets sind in der Zeichnung nicht dargestellt, ebenso nicht die Mittel, die dem Antrieb der beiden Zahnräder 1 und 2 dienen.

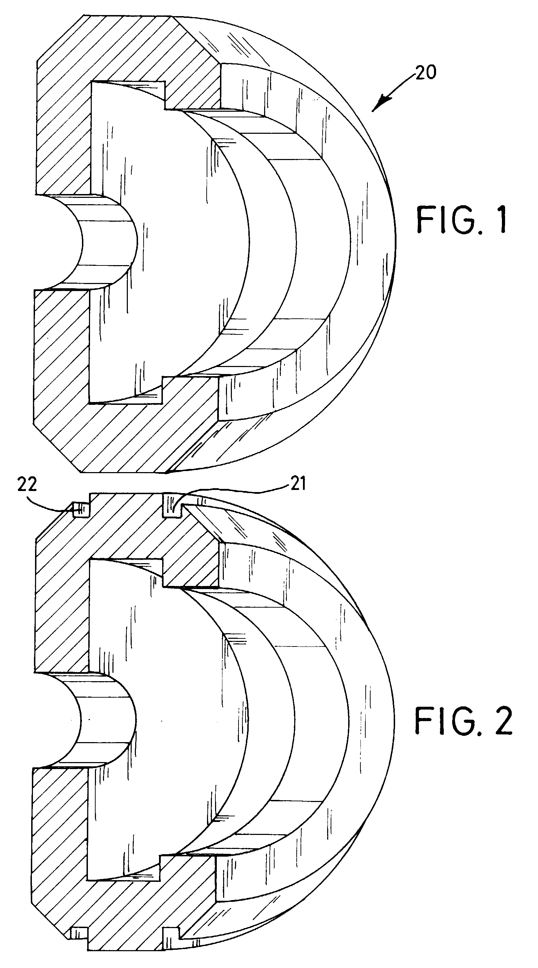

In Fig. 1 ist ein runder Rohling 20 dargestellt, der als Halbfabrikat zur Herstellung beispielsweise des Zahnrades 1 oder 2 dient. Gemäß dem erfindungsgemäßen Verfahren werden in diesen runden Rohling 20 Nuten 21 und 22 beispielsweise eingestochen oder auch ausgefräst, die in Umfangsrichtung des Rohlings 20 verlaufen und eine vorbestimmte Tiefe aufweisen.

Nach Fertigstellung dieses Arbeitsschrittes werden dann beispielsweise mit einem Abwälzfräser in axialer Richtung Ausnehmungen, die später als Zahnlücke 9 bezeichnet werden, in den runden Rohling eingeschnitten, so daß dadurch die Zähne 15 gebildet werden.

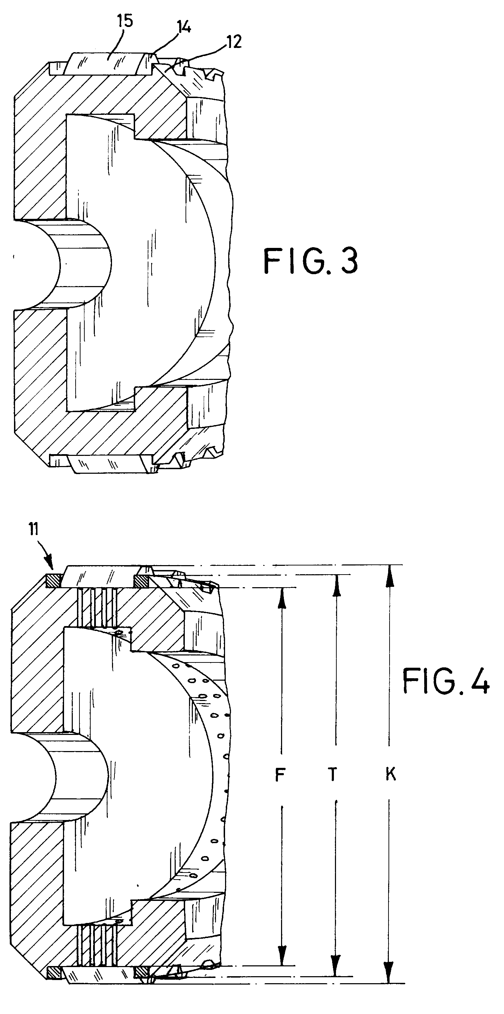

Insbesondere aus Fig. 3 ist erkennbar, daß durch die Breite und die Tiefe der Nuten 21 und 22 die Höhe der Widerlager 12 bestimmt wird.

In das derart bearbeitete Werkstück gemäß Fig. 3 werden dann in die Nuten 21 und 22 Abschlußmittel eingelegt, die bei dem in Fig. 4 dargestellten Ausführungsbeispiel als Abschlußringe ausgebildet sind. Die Ringe bestehen beispielsweise aus einem Stück metallischen Werkstoffes, der in die Nuten 21 und 22 eingebogen wird, wobei dann die sich berührenden Kopfenden des Werkstückes miteinander verschweißt werden. Die Größe des Abschlußmittels 11 und die Tiefe der Nuten 21 und 22 werden so gewählt, daß die Oberkante des Abschlußmittels 11 in Höhe des Teilkreises T liegt, wobei in Fig. 4 der Teilkreis mit T, der Fußkreis des Zahnrades mit F und der Kopfkreis des Zahnrades mit K bezeichnet ist. Hierbei ist es durchaus möglich, daß die Nuten tiefer als der Fußkreis F ausgenommen wird.

Durch diese Arbeits- und Verfahrensweise wird innerhalb der Zahnlücken ein Raum geschaffen, der geeignet ist, einen hohen Druck aufzunehmen, so daß ein einwandfreies Durchpressen der schüttfähigen Masse durch die Bohrungen 5 und 6 erfolgt.

Gemäß der Erfindung wird auch vorgeschlagen, daß anstelle der voraus erläuterten spanabhebenden Herstellung der Zahnlücken ein Preß- oder Senkerodierverfahren eingesetzt werden kann. Hierbei wird in einen Rohling, z. B. eine Ronde vom Umfang durch entsprechende Senk- oder Preß- oder Erodierwerkzeuge die Zahnlücke hergestellt, wobei das verdrängte Material gleichzeitig im Bereich der Zähne nach oben wandert und dadurch die Höhe der Zähne bestimmt. Anschließend erfolgt ein Feinbearbeiten des Umfanges der Ronde, so daß dadurch der Umfang des so gebildeten Stirnrades erzielt wird.

Schließlich zeigt Fig. 5 schematisch die Ausbildung zweier miteinander kämmender Stirnräder, bei denen die Zähne 23 als Rechtecke ausgebildet sind und die Zahnlücken 24 leicht keilige Formen aufweisen, wobei sich diese Keilform zum Zahnlückentiefsten hin verjüngt.

## Patentansprüche

1. Vorrichtung zum Pelletieren von schüttfähigen Massen mit zwei miteinander kämmenden, hohlen Zahnrädern (1, 2) einer Stirnradpaarung, von denen wenigstens eines angetrieben ist, wobei der Zahnkranz (3, 4) beider Zahnräder (1, 2) Bohrungen (5, 6) aufweist, die vom Tiefsten einer Zahnlücke (9) zu einem Innenhohlraum (7, 8) führen dadurch gekennzeichnet, daß der Raum der Zahnlücken (9) in radialer Richtung vom Radius des Fußkreises (F) bis zum Radius des Teilkreises (T) in axialer Richtung nach außen hin durch Abschlußmittel (11) abgeschlossen ist.

2. Vorrichtung nach Anspruch 1, dadurch gekennzeichnet, daß die den Raum der Zahnlücke (9) nach außen hin abschließenden Mittel materialeinheitlich aus einem Zahnradrohling (20) ausgeformt sind.

3. Vorrichtung nach Anspruch 1, dadurch gekennzeichnet, daß die Abschlußmittel (11) als Ringe ausgebildet sind, die zwischen die Widerlager (12) und die axialen Endflächen (14) der Zähne (15) eingepaßt sind.

4. Vorrichtung nach Anspruch 1, dadurch gekennzeichnet, daß die den Raum der Zahnlücke (9) nach außen hin abschließenden Abschlußmittel (11) sich nach außen hin an Widerlager (12) abstützen, die aus den Zahnrädern (1, 2) ausgeformt oder ausgearbeitet sind.

5. Vorrichtung nach einem der vorhergehenden Ansprüche, dadurch gekennzeichnet, daß in radialer Richtung gesehen die Oberkante der als Abschlußmittel (11) eingelegten Ringe dem Teilkreis (T) entspricht.

6. Vorrichtung nach einem der vorhergehenden Ansprüche 1 bis 5, dadurch gekennzeichnet, daß die Zahnlücken (9) und/oder die Bohrungen (5, 6) durch auswechselbare Einsatzstücke geschützt sind.

7. Vorrichtung nach einem der vorhergehenden Ansprüche, dadurch gekennzeichnet, daß die Zähne rechteckig ausgebildet sind und die Zahnlücken leicht keilförmig zum Lückentiefsten zulaufen.

8. Verfahren zur Herstellung einer Vorrichtung nach Anspruch 1 zum Pelletieren von schüttfähigen Massen mit zwei miteinander kämmenden hohen Zahnrädern einer Stirnradpaarung, von denen wenigstens eines angetrieben ist, wobei der Zahnkranz beider Zahnräder Bohrungen aufweist, die vom Tiefsten einer Zahnlücke zu einem Innenhohlraum führen, dadurch gekennzeichnet, daß aus einem den maximalen Umfang und Durchmesser des fertigen Zahnrades entsprechenden runden Rohling (20) in Umfangsrichtung umlaufende Nuten (21, 22) ausgearbeitet werden, anschließend die Zähne (15) durch Ausfräsen der Zahnlücken (9) hergestellt werden und schließlich in die ausgearbeiteten Nuten (21, 22) Ringe eingelegt werden, die die Zahnlücken (9) in axialer Richtung nach außen hin abschließen.

9. Verfahren zur Herstellung einer Vorrichtung nach Anspruch 1 zum Pelletieren von schüttfähigen Massen mit zwei miteinander kämmenden hohlen Zahnrädern einer Stirnradpaarung, von denen wenigstens eines angetrieben ist, wobei der Zahnkranz beider Zahnräder Bohrungen aufweist, die vom Tiefsten einer Zahnlücke zu einem Innenhohlraum führen, dadurch gekennzeichnet, daß in einen dem maximalen Umfang und Durchmesser des fertigen Zahnrades entsprechenden runden Rohling den Zahnlükken entsprechende Vertiefungen, die in axialer Richtung des Zahnrades gesehen nach außen hin abgeschlossen sind, eingearbeitet werden und anschließend die äußere Umfangsfläche des so gebildeten Bauteiles spanabhebend feinbearbeitet wird.

10. Verfahren nach Anspruch 9, dadurch gekennzeichnet, daß die Zahnlücken durch ein Preßverfahren erzielt werden.

11. Verfahren nach Anspruch 9, dadurch gekennzeichnet, daß die Zahnlücken durch ein Senkerodierverfahren erzielt werden.
